Europäisches Patentamt

European Patent Office

Office européen des brevets

(11) Veröffentlichungsnummer: **0 409 082 A1**

## (12) EUROPÄISCHE PATENTANMELDUNG

(21) Anmeldenummer: **90113353.8**

(22) Anmeldetag: **12.07.90**

(51) Int. Cl.5: **C01B 33/152**

(30) Priorität: **21.07.89 DE 3924244**

(43) Veröffentlichungstag der Anmeldung:
**23.01.91 Patentblatt 91/04**

(84) Benannte Vertragsstaaten:
**AT BE CH DE DK ES FR GB IT LI LU NL SE**

(71) Anmelder: **Henkel Kommanditgesellschaft auf Aktien**
**Postfach 1100 Henkelstrasse 67**
**D-4000 Düsseldorf 1(DE)**

(72) Erfinder: **Dolhaine, Hans, Dr.**
**Mercatorstrasse 15**
**D-4000 Düsseldorf(DE)**
Erfinder: **Wolf-Leistikow, Irene, Dr.**
**Lötterfelder Strasse 7**
**D-4005 Meerbusch(DE)**

(54) Verfahren zu Herstellung von Si02-Aerogelen (I).

(57) Die Erfindung beschreibt ein Verfahren zur Herstellung von SiO$_2$-Aerogelen. Hierzu werden Polykieselsäureester als Ausgangsmaterialien eingesetzt, die unter sauren, neutralen oder alkalischen Bedingungen vergelt, anschließend überkritischen Bedingungen unterworfen und deren Alkoholkomponenten unter Entspannung abdestilliert werden.

## VERFAHREN ZUR HERSTELLUNG VON SIO$_2$-AEROGELEN (I)

Gegenstand der Erfindung ist ein Verfahren zur Herstellung von SiO$_2$-Aerogelen unter Verwendung von Polykieselsäureestern als Ausgangsmaterial.

Im allgemeinen sind Aerogele hochporöse Materialien aus Silicium-oder Metalloxiden, die sich durch besonders niedrige Dichten von 70 bis 300 kg/m$^3$ bei extrem hohen inneren Oberflächen von bis zu 1000 m$^2$/g auszeichnen. Aufgrund dieser Eigenschaften eignen sich insbesondere SiO$_2$-Aerogele in hervorragender Weise als Wärme- und Schalldämmstoffe, als Katalysatorträger und als Adsorbentien.

Die Herstellung von Aerogelen kann nach dem Stand der Technik auf zwei verschiedenen Wegen über einen Sol-Gel-Prozeß mit anschließender überkritischer Trocknung erfolgen.

Beim sogenannten Kistler-Verfahren (S.S. Kistler, J. Phys. Chem. 36 (1932), Seiten 52 - 64) wird Wasserglas als Ausgangsprodukt verwendet. Durch Ansäuern von Wasserglas mit HCl oder H$_2$SO$_4$ wird ein Silica-Hydrogel erzeugt, das anschließend durch Auswaschen mit Wasser von Alkalimetallionen befreit wird. Im Hydrogel enthaltenes Wasser wird danach in einem Schritt gegen 95 %igen Alkohol (Ethanol, Methanol) vollständig ausgetauscht. Anschließend erfolgt überkritische Trocknung des entstandenen Alkogels im Autoklaven.

Da die Trocknung von Alkogelen hohe Temperaturen und hohe Drücke erfordert, wurde ein Trockenverfahren aus CO$_2$ entwickelt [EP 171.722], wobei vor der überkritischen Trocknung das organische Lösungsmittel gegen CO$_2$ ausgetauscht wird. Die überkritische Trocknung aus CO$_2$ erfolgt bei wesentlich geringeren Temperaturen ($T_k$ = 31.1 °C, $p_k$ = 73,9 bar).

Das zweite Verfahren zur Herstellung von Aerogelen nach dem Stand der Technik geht direkt von Alkogelen aus [DE 18 11 353, US 36 72 833]. Zur Erzeugung von SiO$_2$-Aerogelen werden Tetramethoxysilan in Methanol bzw. Tetraethoxysilan in Ethanol mit einer genau dosierten Menge Wasser versetzt. Bei der Hydrolyse bildet sich unter Alkohol-Abspaltung Kieselsäure, die wiederum unter H$_2$O-Abspaltung ein SiO$_2$-Gel ausbildet (Sol/Gel-Prozeß). Das so entstandene Alkogel wird überkritisch im Autoklaven getrocknet.

Der vorliegenden Erfindung liegt demgegenüber die Aufgabe zugrunde, in einfacher, großtechnischer Weise SiO$_2$-Aerogele, insbesondere aus dem relativ preiswerten Rohstoff Wasserglas in einem gegenüber dem Stand der Technik verkürzten und damit weniger zeitaufwendigen und kostengünstigeren Verfahren herzustellen.

Diese Aufgabe wird erfindungsgemäß durch ein Verfahren zur Herstellung von SiO$_2$-Aerogelen gelöst, bei welchem man ein intermediär gebildetes SiO$_2$-Gel unter überkritischen Bedingungen behandelt, das dadurch gekennzeichnet ist, daß man einen oder mehrere Polykieselsäureester unter sauren, neutralen oder alkalischen Bedingungen vergelt, das gebildete Gel überkritischen Bedingungen unterwirft und anschließend die Alkoholkomponenten unter Entspannung abdestilliert.

Die Herstellung der Polykieselsäureester - nachstehend auch PKSE genannt - aus Wasserglas kann beispielsweise nach bekannter Technologie über Extraktionsverfahren, erfolgen.

Eine Methode zur Herstellung von Polykieselsäurestern geht von Wasserglaslösungen aus (R. K. Iler, P. S. Pinkney in Industrial and Engineering Chemistry 39 , 1379 (1947)). Beim Ansäuern der Wasserglaslösungen bilden sich aus den Silikatanionen die freien Kieselsäuren. Aus den primär vorliegenden niedermolekularen und nicht isolierbaren Kieselsäuren entstehen durch Kondensation Polykieselsäuren, die ihrerseits zu sphärischen Polykieselsäurepartikeln polymerisieren. Da sich Polykieselsäuren nicht in wäßriger Lösung mit Alkoholen verestern lassen (US 3 351 561), müssen Polykieselsäuren vor der Veresterung aus der wäßrigen Lösung in ein geeignetes organisches Lösungsmittel transferiert werden. Diese Lösungsmittel müssen wasserlöslich oder mit Wasser mischbar und durch Elektrolytzusatz wieder aussalzbar sein. In den US-Patentschriften 2 383 653, 2 408 654 und 2 395 880 werden als Extraktionsmittel Alkohole, beispielsweise n-Propanol, i-Propanol, i-Butanol, t-Butanol und i-Pentanol; Ether, beispielsweise Polyethylenglykole; Ketone, beispielsweise Aceton; Amide, beispielsweise N-Isobutylacetamid; Amine; Phosphorsäureester, beispielsweise Triethyl- und tributylphosphat sowie Phosphite, beispielsweise Tributylphosphit genannt. Die Extraktionsraten der aufgeführten Extraktionsmittel sowie die maximal erzielbare SiO$_2$-Konzentration in den Extraktionsmitteln sind sehr unterschiedlich. So können beispielsweise bei Verwendung von n-Propanol, i-Propanol und t-Butanol Extraktionsraten von etwa 70 % erzielt werden, wobei der SiO$_2$-Gehalt in den Extrakten bei maximal 20 Gew.-% liegt.

Während der Umsetzung der extrahierten Polykieselsäuren mit Alkoholen zu den entsprechenden Polykieselsäureestern muß das gebildete Reaktionswasser durch beispielsweise azeotrope Destillation oder durch Zusatz wasserbindender Mittel aus dem Reaktionsgemisch entfernt werden. Bei dem in Industrial and Engineering Chemistry 39 , 1379 (1947) beschriebenen Verfahren wird mit t-Butanol extrahierte Polykieselsäure unter genauer Kontrolle von Druck und Reaktionstemperatur sowie Einhaltung einer bestimmten SiO₂-Konzentration mit n-Butanol verestert.

In Journal of Polymer Science, Polymer Chemistry Edition 22 , 3759 (1984) wird die Veresterung von Polykieselsäure/Tetrahydrofuran-Lösungen mit Methanol, Ethanol, Isopropanol, n-Butanol, t-Butanol und Octanol in einer Veresterungsapparatur mit zwei Kolben beschrieben. Zunächst wird aus dem sich im Reaktionskolben befindenden Gemisch aus Polykieselsäure/Tetrahydrofuran-Lösung und Alkohol das Tetrahydrofuran mittels Destillation entfernt. Anschließend wird die Veresterung bei Temperaturen von 63 °C und höher durchgeführt, wobei das entstehende Alkohol/Wasser-Azeotrop in den zweiten Kolben zur Trocknung geleitet wird. Um das Volumen der Reaktionsmischung konstant zu halten, wird gleichzeitig getrockneter Alkohol aus dem zweiten Kolben wieder der Reaktionsmischung zugeführt.

Die für das erfindungsgemäße Verfahren als Ausgangsmaterial für die Polykieselsäureester einzusetzenden Polykieselsäure/Lösungsmittel-Extrakte, die im folgenden als Solvenz-SiO₂-Extrakte oder SiO₂-Extrakte abgekürzt werden, lassen sich in bekannter Weise herstellen, indem Alkalimetallwassergläser zu Mineralsäuren, beispielsweise Schwefelsäure, Salzsäure, Phosphorsäure und/oder Salpetersäure gegeben werden. Vorzugsweise werden handelsübliche wäßrige Natrium- und/oder Kaliumwasserglaslösungen mit Molverhältnissen Siliciumdioxid : Alkalimetalloxid im Bereich zwischen (1 bis 4):1 eingesetzt. Besonders reaktive Polykieselsäuren werden erhalten, wenn der SiO₂-Gehalt der Wasserglaslösungen vor dem Ansäuern unterhalb 15 Gew.-%, vorzugsweise unterhalb 12 Gew.-% liegt. Die Wasserglaslösungen werden den Mineralsäuren in solchen Mengen zugesetzt, daß der pH-Wert zwischen 1 und 4, vorzugsweise zwischen 1 und 3,5 und besonders bevorzugt zwischen 1,5 und 2,5 liegt. Dabei bilden sich wasserklare Polykieselsäurelösungen, die bei den genannten pH-Werten erst nach etwa 20 Stunden zu Gelen erstarren.

Um die Polykieselsäuren aus der wäßrigen Phase in die organische Phase zu transferieren, werden die wäßrigen Polykieselsäurelösungen mit einem organischen Lösungsmittel versetzt und zum Aussalzen mit Alkalimetallhalogeniden, beispielsweise Natriumchlorid, gesättigt. Anschließend wird die organische Phase abgetrennt und mit wasserfreiem Natriumsulfat getrocknet.

Nach einer bevorzugten Ausgestaltung der vorliegenden Erfindung ist die Alkoholkomponente des Polykieselsäureesters ein Alkanol mit 1 bis 8 C-Atomen. Beispiele hierfür sind Methanol, Ethanol, i-Propanol, n-Propanol, t-Butanol, n-Butanol, Pentanol, Hexanol, Heptanol und Octanol. Bevorzugt werden Hexanol und Ethanol. Besonders bevorzugt im Sinne der Erfindung ist die Verwendung von Polykieselsäureethylester.

Die Polykieselsäureester werden in der Regel mit einem SiO₂-Gehalt von 2 bis 15 Gew.-% verwendet. Bevorzugt werden Polykieselsäureester mit einem SiO₂-Gehalt von 5 bis 10 Gew.-% , wobei insbesondere ein SiO₂-Gehalt von 9 Gew.-% bevorzugt wird.

Der PKSE wird vorzugsweise unter Rühren in Alkohol gelöst. Dabei wird bevorzugt ein kurzkettiger Alkohol mit 1 bis 8 C-Atomen verwendet. Beispiele hierfür sind Methanol, Ethanol, i-Propanol, n-Propanol, t-Butanol, n-Butanol, Pentanol, Hexanol, Heptanol und Octanol. Erfindungsgemäß wird vorzugsweise als Alkohol Ethanol oder Hexanol verwendet.

Die anschließende Vergelung des PKSE kann in saurem, neutralen oder alkalischem Milieu erfolgen. Bevorzugt werden basische Zusätze verwendet, die zu einem pH-Wert von 8 bis 9 führen. Hierzu werden wäßrige Ammoniak- oder Natriumhydroxidlösungen besonders bevorzugt. Nach einer weiteren Ausführungsform der vorliegenden Erfindung kann man die Vergelung der PKSE auch durch einen Zusatz von Wasser herbeiführen, wobei ein katalytischer Zusatz von Säuren oder Laugen nicht erforderlich ist. Das gebildete Gel wird anschließend im Autoklaven überkritischen Bedingungen unterworfen, vorzugsweise bei Temperaturen T von 250 bis 300 °C und Drücken p von 60 bis 200 bar (kritische Daten von Ethanol: $T_k$ = 243 °C $p_k$ = 63 bar). Besonders bevorzugt wird eine Temperatur von 280 °C bei einem Druck von 100 bis 160 bar.

In einer bevorzugten Ausführungsform dieser Erfindung werden die entsprechenden Alkoholkomponenten unter Entspannung bei Temperaturen von 250 bis 300 °C in wenigstens 2 Stunden bis maximal 6 Stunden abdestilliert.

Verschiedene SiO₂-Konzentrationen und daraus resultierend modifizierte innere Oberflächen der Aerogele lassen sich durch Verdünnung der PKSE mit Alkanolen, vorzugsweise Ethanol, einstellen. Eine weitere Variation der Aerogel-Eigenschaften ist durch Stehenlassen (Alterung) des intermediär gebildeten Gels vor der überkritischen Behandlung zu erzielen. Bevorzugt werden Alterungszeiten von wenigen Stunden bis zu 14 Tagen.

Gegenüber dem Stand der Technik umfaßt das neue Verfahren weniger Arbeitsstufen. Diese Vereinfachung führt zu einer beträchtlichen Ersparnis von Zeit, Material und Kosten.

Die durch das oben beschriebene Verfahren erhaltenen Aerogele sind sehr leicht (Schüttdichte: 0.05 bis 0.15 g/cm³), haben große innere Oberflächen (300 bis 1000 m²/g) und eignen sich deshalb hervorragend als Wärme- und Schalldämmstoffe, als Katalysatorträger und als Adsorbenzien.

## Beispiel 1

Aerogel aus Polykieselsäureethylester, säurekatalysiert

333 g Polykieselsäureethylester/Ethanol-Lösung (im folgenden als PKSE-C$_2$ abgekürzt) mit einem SiO$_2$-Gehalt von 9 Gew.-% wurden mit 66 g Ethanol vermischt, 35 g Wasser sowie 3 Tropfen konzentriertes HCl zugegeben und die Mischung (7,3 Gew.-% SiO$_2$) in einen Autoklaven überführt.

Durch Aufpressen von N$_2$ wurde ein Vordruck von 40 bar eingestellt und die Mischung während 2,75 Stunden auf 280 °C aufgeheizt. Danach wurde das Ethanol unter Entspannung innerhalb 4 Stunden bei 280 °C abdestilliert.

Es entstanden 31 g eines Aerogeles mit einer Oberfläche von 320 m$^2$/g BET.

## Beispiel 2

Aerogel aus Polykieselsäureethylester

112,2 g PKSE-C$_2$/Ethanol-Lösung mit einem SiO$_2$-Gehalt von 9 Gew.-% wurden mit 88,8 g Ethanol sowie 12 g Wasser vermischt (5 Gew.-% SiO$_2$) und analog Beispiel 1 im Autoklaven behandelt.

Es resultierten 10 g eines Aerogeles mit einer Oberfläche von 540 m$^2$/g BET.

## Beispiel 3

Aerogel aus Polykieselsäureethylester

222,2 g PKSE-C$_2$ / Ethanol-Lösung mit einem SiO$_2$-Gehalt von 9 Gew.-% wurden mit 177,8 g Ethanol und 24 g Wasser vermischt (5 Gew.-% SiO$_2$) und in einen Autoklaven überführt.

Ohne Aufpressen von N$_2$ wurde während 3 Stunden auf 280 °C (120 bar) aufgeheizt und über 5 Stunden das Ethanol unter Entspannung bei 280 °C abdestilliert.

Es resultierten ca. 21 g eines spröden Aerogeles mit einer Oberfläche von 650 m$^2$/g BET.

## Beispiel 4

Aerogel aus Polykieselsäureethylester, basenkatalysiert

250 g PKSE-C$_2$ / Ethanol-Lösung mit einem SiO$_2$-Gehalt von 9 Gew.-% wurden mit wenigen Tropfen 2 mol/l NaOH von pH 1,3 auf pH 3,2 gebracht. Dabei bildete sich eine geringe Menge eines Feststoffes (SiO$_2$). Die Mischung wurde in einen Autoklaven überführt.

Durch Aufpressen von N$_2$ wurde ein Vordruck von 40 bar eingestellt und die Mischung 3,5 Stunden auf 280 °C aufgeheizt, 30 min bei der Temperatur gehalten und das Ethanol unter Entspannung bei 280 °C in 4 Stunden abdestilliert.

Man erhielt einen leicht gelblichen, gegen Licht durchscheinenden, relativ harten Festkörper, der bei mechanischer Beanspruchung glasartig brach.

Es entstanden 22 g eines Aerogeles mit einer inneren Oberfläche von 880 m$^2$/g BET.

## Beispiel 5

Aerogel aus Polykieselsäureethylester, basenkatalysiert

250 g PKSE-C$_2$ / Ethanol-Lösung mit einem SiO$_2$-Gehalt von 9 Gew.-% wurden mit 5 Tropfen einer 25 %-igen wäßrigen Ammoniak-Lösung von pH 1,3 auf pH 8,2 eingestellt. Nach ca. 1 h wurde ein festes Gel erhalten, das in einen Autoklaven gefüllt wurde (Gelbrocken).

Durch Aufpressen von N$_2$ wurde ein Vordruck von 60 bar eingestellt und die Mischung in 3 Stunden auf 280 °C aufgeheizt, 30 min bei der Temperatur gehalten und in 5 Stunden das Ethanol unter Entspannung bei 280 °C abdestilliert. Es wurden 22 g eines dunklen, sehr festen, gegen Licht durchscheinenden Aerogeles mit einer Oberfläche von 903 m$^2$/g BET erhalten.

## Beispiel 6

Aerogel aus Polykieselsäureethylester, basenkatalysiert

150 g PKSE-C$_2$ / Ethanol-Lösung mit einem SiO$_2$-Gehalt von 9 Gew.-% wurden mit 150 g Ethanol vermischt (4,5 Gew.-% SiO$_2$) und mit wenigen Tropfen einer 25 %-igen wäßrigen Ammoniak-Lösung auf pH > 8 gebracht, zum Gelieren stehen gelassen und in einen Autoklaven eingefüllt (Gelbrocken).

Durch Aufpressen von N$_2$ wurde ein Vordruck von 40 bar eingestellt und die Mischung in 2,5 Stunden auf 280 °C aufgeheizt, 30 min bei der Temperatur gehalten und in 5 Stunden das Ethanol unter Entspannung bei 280 °C abdestilliert. Es wurden 14 g eines weißen, relativ festen, gegen Licht durchscheinenden Aerogeles mit einer Oberfläche von 800 m²/g BET erhalten.

Beispiel 7

Aerogel aus Polykieselsäurehexylester

50 g Polykieselsäurehexylester / Hexanol-Lösung mit einem SiO₂-Gehalt von 20 Gew.-% wurden mit 150 g Ethanol vermischt (5 Gew.-% SiO₂), mit 5 Tropfen einer 25 %-igen wäßrigen Ammoniak-Lösung auf pH 8 eingestellt und in den Autoklaven gefüllt. Nach Aufpressen von 80 bar N₂ wurde in 3 Stunden auf 280 °C aufgeheizt und in 5 Stunden das Ethanol / Hexanol-Gemisch unter Entspannung bei 280 °C abdestilliert. Es wurden log eines leichten, relativ festen, gegen Licht durchscheinenden Aerogeles mit einer inneren Oberflächen von 750 m²/g BET erhalten.

**Ansprüche**

1. Verfahren zur Herstellung von SiO₂-Aerogelen, bei welchem man ein intermediär gebildetes SiO₂-Gel unter überkritischen Bedingungen behandelt, dadurch gekennzeichnet, daß man einen oder mehrere Polykieselsäureester unter sauren, neutralen oder alkalischen Bedingungen vergelt, das gebildete Gel überkritischen Bedingungen unterwirft und anschließend die Alkoholkompcnenten unter Entspannung abdestilliert.

2. Verfahren nach Anspruch 1, dadurch gekennzeichnet, daß die Alkoholkomonente des Polykieselsäureesters ein Alkanol mit 1 bis 8 C-Atomen ist.

3. Verfahren nach Anspruch 2, dadurch gekennzeichnet, daß die Alkoholkomponente des Polykieselsäureesters Ethanol oder Hexanol, insbesondere Ethanol, ist.

4. Verfahren nach Ansprüchen 1 bis 3, dadurch gekennzeichnet, daß der Polykieselsäureester einen SiO₂-Gehalt von 2 bis 15 Gew.-%, vorzugsweise von 5 bis 10 Gew.-% und insbesondere von 9 Gew.-% aufweist.

5. Verfahren nach Ansprüchen 1 bis 4, dadurch gekennzeichnet, daß der Polykieselsäureester in einem Alkanol mit 1 bis 8 C-Atomen gelöst wird.

6. Verfahren nach Anspruch 5, dadurch gekennzeichnet, daß der Polykieselsäureester in Ethanol oder Hexanol gelöst wird.

7. Verfahren nach Ansprüchen 1 bis 6, dadurch gekennzeichnet, daß man den Polykieselsäureester unter alkalischen Bedingungen vergelt.

8. Verfahren nach Anspruch 7, dadurch gekennzeichnet, daß man den Polykieselsäureester unter Zugabe von Ammoniak oder Natriumhydroxid vergelt.

9. Verfahren nach Anspruch 1 bis 8, dadurch gekennzeichnet, daß die überkritische Trocknung der erhaltenen Gele im Autoklaven bei Temperaturen von 250 bis 300 °C und Drücken von 60 bis 200 bar erfolgt.

10. Verfahren nach Anspruch 8, dadurch gekennzeichnet, daß die überkritische Trockung der aus Ethanol erhaltenen Gele im Autoklaven bei einer Temperatur von 280 °C und Drücken von 100 bis 160 bar erfolgt.

11. Verfahren nach Anspruch 9 und 10, dadurch gekennzeichnet, daß nach der überkritischen Trocknung die entsprechenden Alkoholkomponenten unter Entspannung bei Temperaturen von 250 bis 300 °C in wenigstens 2 Stunden bis maximal 6 Stunden abdestilliert werden.

12. SiO₂-Aerogele erhalten nach Verfahren der Ansprüche 1 bis 11.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| L,A | CHEMICAL ABSTRACTS Band 111, Nr. 14, 2. Oktober 1989, Seite 416, Zusammenfassung Nr. 12157f, Columbus, Ohio, US; J. IURA et al.: "Silica aerogels prepared by the supercritical drying technique" & J. Phys., Colloq. 1989, (C4, Proc. Int. Symp. Aerogels-ISA 2, 2nd, 1988), C4-53/C4-58 --- | 1 | C 01 B 33/152 |
| A | CHEMICAL ABSTRACTS Band 107, Nr. 14, 5. Oktober 1987, Seite 126, Zusammenfassung Nr. 117793e, Columbus, Ohio, US; D. NGUYEN et al.: "Preparation of silica aerogel insulating material" & J. Can. Ceram. Soc. 1985, Band 54, Seiten 40-42 --- | 1 | |
| A | PATENT ABSTRACTS OF JAPAN Band 9, Nr. 301 (C-316)(2024), 28. November 1985; & JP-A-60141627 (OOSAKA SUISO KOGYO K.K.) 26.07.1985 --- | 1 | |
| A | US-A-3 977 993 (T.J. LYNCH) * Anspruch 1 * --- | 1 | RECHERCHIERTE SACHGEBIETE (Int. Cl.5) C 01 B 33/00 |
| A | US-A-2 978 298 (J.W. WETZEL et al.) * Beispiel; Anspruch 1 * --- | 1 | |
| A,D | DE-A-1 811 353 (ETAT FRANCAIS) * Anspruch 1 * --- | 1 | |
| A,D | US-A-3 351 561 (W.L. ALBRECHT et al.) * Anspruch 7 * ----- | 1 | |

Der vorliegende Recherchenbericht wurde für alle Patentansprüche erstellt

| Recherchenort | Abschlußdatum der Recherche | Prüfer |
|---|---|---|
| BERLIN | 11-10-1990 | CLEMENT J.P. |